# EUROPÄISCHE PATENTSCHRIFT

(11) **EP 2 245 318 B1**
(45) Veröffentlichungstag und Bekanntmachung des Hinweises auf die Patenterteilung: **31.07.2013**
(21) Anmeldenummer: 09710426.9
(22) Anmeldetag: 04.02.2009
(51) Int. Cl.: F16B 7/04

(54) **VERBINDUNGSKNOTEN FÜR PROFILELEMENTE**
CONNECTING JUNCTION FOR PROFILED ELEMENTS
NOEUDS D' ASSEMBLAGE POUR ÉLÉMENTS PROFILÉS

(30) Priorität: 15.02.2008 CH 217082008
(43) Veröffentlichungstag der Anmeldung: 03.11.2010
(73) Patentinhaber: Syma Intercontinental AG, 9533 Kirchberg (CH)
(72) Erfinder: ZÜLLIG, Kurt, CH-9533 Kirchberg SG (CH); STRÄSSLE, Marcel, CH-9533 Kirchberg (CH)
(74) Vertreter: Liebetanz, Michael
(86) Internationale Anmeldenummer: PCT/CH2009/000043
(87) Internationale Veröffentlichungsnummer: WO 2009/100551

(56) Entgegenhaltungen:
- CH-A5- 679 511
- DE-A1- 1 478 415
- DE-A1- 4 315 603
- DE-U1-202006 014 679

## Beschreibung

### Technisches Gebiet der Erfindung

Die vorliegende Erfindung betrifft ein Knotenelement für Profilelemente, insbesondere für den Gerüst- und Messebau.

### Technischer Hintergrund der Erfindung

Auf diesem Gebiet sind aus dem Stand der Technik eine Vielzahl von verschiedenen Konstruktionen bekannt. Allen gemeinsam ist, dass solche Systeme Knotenpunkte vorsehen, an denen stabförmige Profilelemente befestigt werden können. Solche Knoten, beispielsweise nach der EP 1 244 857 der Anmelderin, sind insbesondere würfelförmig und verfügen über sechs gleichartige Enden, an denen jeweils ein Profil befestigt werden kann. Aus der EP 1 003 977 der Anmelderin sind sogenannte Verschlusselemente bekannt, die in die Frontseite der Profilelemente eingelassen sind und wobei ein Formschluss des betreffenden freien Endes des Profilelementes mit dem Knotenelement vorgesehen ist. Insbesondere kann es sich bei einem solchen Verschlusselement um ein in nicht verriegeltem Zustand in der geometrischen Umhüllung quaderförmiges Element handeln, welches über Verriegelungselemente in Form von Klemmhaken verfügt, die somit in einem nicht verriegelten Zustand in eine Öffnung des Knotenelementes eingeführt werden können. Durch Betätigung der Verriegelungselemente im Sinne eines Aufspreizens der sie bildenden Klemmhaken verhaken sich diese Verriegelungselemente in dem Freiraum hinter der Öffnung in dem bekannten Würfel. Somit kann in einfacher Weise und sehr schnell eine Gerüst-Struktur mit Profilen und Knotenelementen aufgebaut werden.

Es besteht nun von Kundenseite das Bedürfnis, solche Gerüst-Strukturen mit Wänden auszufüllen, einerseits als Sichtschutz, aus ästhetischen Gründen oder mit durchsichtigen Elementen als Vitrine. Hierfür verfügen die Profilelemente über longitudinal in ihnen verlaufende Nuten, in welche flächige Elemente wie Paneele, Glasplatten oder ähnliche eingeschoben werden können. Somit lässt sich in einfacher Weise eine beliebige über vier Eckknoten aufgespannte Gerüstfläche schnell und formschön verschliessen.

### Zusammenfassung der Erfindung

Der bekannte Knoten aus EP 1 244 857 weist nun den Nachteil auf, dass er lediglich als Eckknoten eingesetzt werden kann. Es ist mit ihm nicht möglich, eine durchgehende Paneelwand in die Nuten der Profilelemente einzulegen, da der Knoten geschlossene Flächen an seinen Aussenseite oder an den Aussenkanten aufweist.

Ein Knottenelement gemäß dem Oberbegriff des Anspruchs 1 ist aus dem Dokument DE 43 15 603 A1 bekannt.

Ausgehend von diesem Stand der Technik liegt der Erfindung die Aufgabe zugrunde, einen verbesserten Knoten anzugeben, mit dem insbesondere Paneelwände eingesetzt werden können, die über zwei diametral an einen solchen Knoten angrenzende Profilelemente verlaufend vorgesehen sein können.

Diese Aufgabe wird für einen Knoten der eingangs genannten Art mit den Merkmalen des Anspruchs 1 gelöst. Dabei ist ein Knotenelement für Profilelemente vorgesehen, welche mit Hilfe von Verschlusselementen mit dem Knotenelement verbindbar sind. Dabei weist das Knotenelement mindestens an zwei gegenüberliegenden Seiten mindestens eine schlitzförmige Öffnung zur Aufnahme des Verschlusselementes auf, wobei sich die schlitzförmigen Öffnungen mindestens teilweise seitlich in einen dahinter liegenden Freiraum verbreitern. Die schlitzförmigen Öffnungen sind über die gesamte Seite des Knotenelementes durchgehend und weisen eine vorbestimmte Tiefe auf. Damit können einstückige Wandflächen über einen solchen Knoten hinweg in zwei mit einer Längsnut versehene und an dem Knoten gegenüberliegend befestigte Profilelemente eingesetzt werden.

Ein weiteres Ziel der Erfindung liegt darin, eine mit solchen Profilelementen und Knoten aufgebaute Gerüst-Struktur mit flexiblen Abgängen zu versehen, was bedeutet, dass Profile in einem beliebigen Winkel und in einer beliebigen Höhe an bestehenden Profilelementen befestigt werden können.

Dieses Ziel wird durch eine zentrische Durchbohrung im Knotenelement zur Aufnahme eines durch das Knotenelement hindurchführbaren Profilelementes erreicht.

Weitere vorteilhafte Ausführungsformen sind in den Unteransprüchen gekennzeichnet.

### Kurze Beschreibung der Zeichnungen

Die Erfindung wird nun unter Bezugnahme auf die Zeichnungen anhand von beispielhaften Ausführungsbeispielen näher beschreiben. Es zeigen:
- Fig. 1: eine perspektivische Darstellung eines Knotenelementes gemäss einem ersten Ausführungsbeispiel der Erfindung mit vier angesetzten Profilelementen;
- Fig. 2: eine perspektivische Ansicht eines Profilelementes mit integriertem Verschlusselement;
- Fig. 3: eine Seitenansicht des Würfels nach Fig. 1, von irgendeiner Seite aus gesehen;
- Fig. 4: eine perspektivische Ansicht eines zweiten Ausführungsbeispiels eines Knotenelementes gemäss der Erfindung mit drei angesetzten Profilelementen;
- Fig. 5: eine Draufsicht auf das Knotenelement nach Fig. 4;
- Fig. 6: einen Einsatz zur Verriegelung des Knotenelementes nach Fig. 5;
- Fig. 7: eine perspektivische Ansicht eines Knotenelementes gemäss dem zweiten Ausführungsbeispiel mit zwei eingebauten Profilelementen;
- Fig. 8: eine perspektivische schematische Darstellung von Knotenelementen gemäss einem ersten und zweiten Ausführungsbeispiel zur Illustrierung der Erfindung;
- Fig. 9: eine perspektivische Ansicht eines modularen Knotenelementes gemäss einem dritten Ausführungsbeispiel der Erfindung;
- Fig. 10: eine perspektivische Ansicht des Knotenelementes nach Fig. 9 vor dem Zusammenbau;
- Fig. 11: eine perspektivische Ansicht eines modularen Knotenelementes gemäss einem vierten Ausführungsbeispiel der Erfindung mit Einsatz; und
- Fig. 12: eine perspektivische Ansicht des Knotenelementes nach Fig. 11 ohne Einsatz.

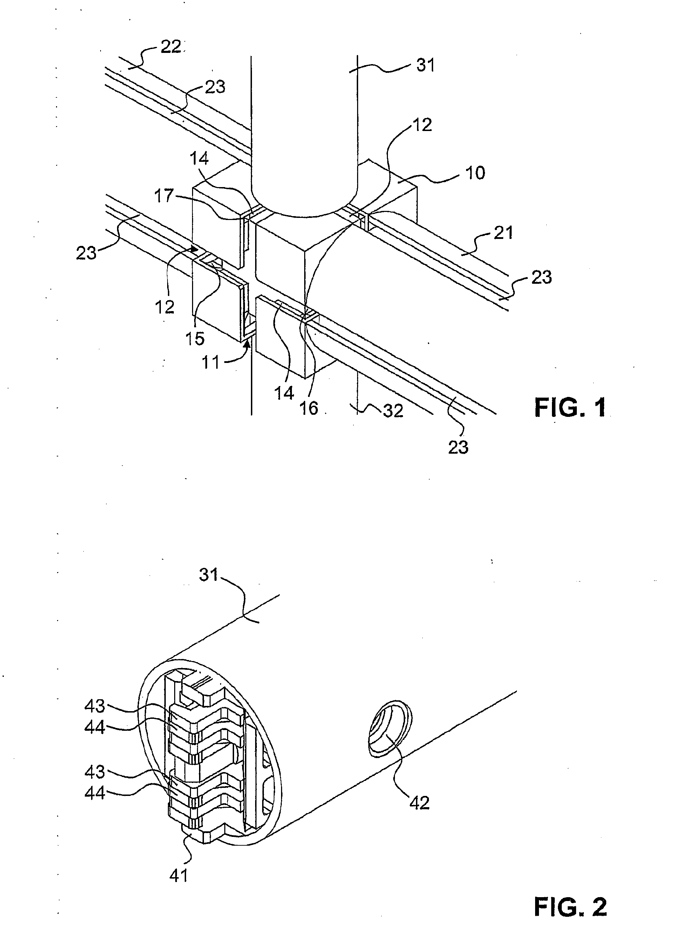

Die Fig. 1 zeigt ein Knotenelement 10 gemäss einem ersten Ausführungsbeispiel der Erfindung, an dem an zwei gegenüberliegenden Seiten Profilelemente 21 und 22 befestigt sind. Im rechten Winkel dazu sind weitere Profilelemente 31 und 32 befestigt. Unter Bezugnahme auf Fig. 2 wird die Art der Befestigung beim hier vorgestellten Ausführungsbeispiel ersichtlich. Die Fig. 2 zeigt eine perspektivische Ansicht eines Profilelementes 31 mit integriertem Verschlusselement 41, welches über einen in die Öffnung 42 einführbaren Schlüssel, beispielsweise einen Sechskant, betätigbar ist. Das Verschlusselement 41 verfügt über eine Vielzahl von hier acht Rasthaken, die in wechselnder Abfolge mit den Bezugszeichen 43 und 44 bezeichnet sind. Damit ist angedeutet, dass die Rasthaken mit dem Bezugszeichen 43 sich beim Spreizen des Verschlusselementes gemäss der Figur 2 in Zeichenrichtung nach links oben bewegen, während die Rasthaken 44 sich in entgegen gesetzter Richtung nach rechts unten bewegen. Somit ist es möglich, das im Ruhezustand in Form eines Quaders überstehende Verschlusselement 41 in ein rechteckiges Langloch einzuführen, welches in einer Platte vorgesehen ist und dann durch Spreizen der Rasthaken 43 und 44 das Profilelement mit der zum Knotenelement gehörenden Platte festzusetzen.

Neben dem hier in Fig. 2 dargestellten Verschlusselement sind eine Reihe anderer Verschluss-Mechanismen mit Rasthaken möglich, die allesamt auf dem Prinzip des Spreizens und Hintergreifens von Elementen des Knotenelementes zur Erreichung eines Formschlusses basieren. Unter Bezugnahme auf die Figur 1 ist somit klar, dass die vier Profilelemente 21, 22, 31 und 32 in entsprechender Weise an dem Knotenelement 10 befestigt sind. Das Knotenelement 10 verfügt hierfür über eine durchgehende kreuzförmige Nut in jeder seiner sechs Seiten. Die Nuten sind mit den Bezugszeichen 11 und 12 versehen worden. Neben einem Würfel, auf dem alle sechs Seiten solche kreuzförmige Nuten 11 und 12 aufweisen, ist es natürlich auch möglich, dass beispielsweise nur fünf Seiten solche Nuten 11, 12 aufweisen und die sechste Seite ein Fusselement bzw. ein Dachelement aufnimmt und somit anders ausgestaltet ist.

Es ist prinzipiell auch möglich, in anderen Ausführungsbeispielen bei vereinfachten Knotenelementen 10 nur im Sinne der Figur 1 horizontal verlaufende Nuten 12 vorzusehen und keine hierzu vertikal verlaufenden Nuten 11. Wesentlich in diesem Zusammenhang ist das Zusammenspiel dieser Nuten 11 bzw. 12 mit den Profilelementen 21 bzw. 22. Zum Füllen der durch die Profilelemente 21 bzw. 22 aufgespannten Flächen werden Paneele, Platten oder Glasflächen vorgesehen, die in den Profilelementen 21 bzw. 22 vorgesehenen longitudinalen Nuten oder Längsnuten 23 eingeschoben werden können. Die Längsnuten 23 bei den Profilelementen 21 bzw. 22 der Fig. 1 weisen Hinterschneidungen auf, so dass es möglich ist, senkrecht auf diese Profilelemente 21 bzw. 22 andere Profilelemente aufzusetzen, in der Fig. 2 dargestellt als Verschlusselement 41. Grundsätzlich wäre es jedoch auch möglich, eine U-förmige Längsnut 23 vorzusehen. Die Tiefe der Nut 23 bestimmt die Möglichkeit der Tiefe des Einschiebens der Paneelplatte oder Glasplatte in das Profilelement 21, 22 und somit indirekt auch die Verwindungssteifigkeit.

Im Systemverbund mit dem Knotenelement 10 weist dieses Knotenelement 10 über entsprechend gleich tiefe Nuten 12 bzw. 11 auf. Somit ist es möglich, in der Fig. 1 beispielsweise in der zum Betrachter hinweisenden Seite eine durchgehende Nuten-Abfolge 23, 12, 23 einzusetzen, so dass sich, von rechts nach links gesehen, eine entsprechende Paneele über die drei Elemente: Profilelement 21, Würfel 10, Profilelement 22, erstreckt. Dies ist bei einem Knotenelement des Standes der Technik nicht möglich.

Vorzugsweise sind die alternativen Profilelemente 31 und 32 in einem Umfang so ausgelegt, dass ihr Durchmesser dem entspricht, der durch ein Profilelement 21 gebildet werden würde, wenn man dieses auf den Durchmesser der longitudinalen Nuten 23 reduziert. Somit ist es möglich, eine entsprechende Paneelplatte in eine Nut 23 einzusetzen, die dann seitlich gegen ein Profilelement 31 stösst. Auch andere Formen der Profilelemente sind möglich, beispielsweise mit quadratischem Querschnitt mit den Dimensionen des Knotenelementes 10.

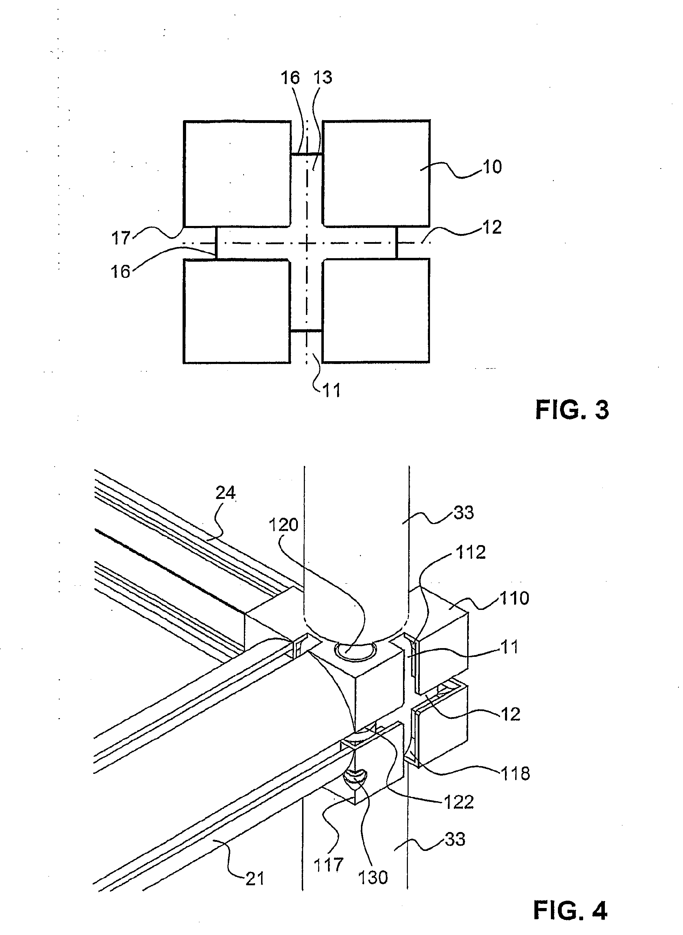

Unter kurzer Bezugnahme auf die Figur 3 wird auf eine Draufsicht auf ein Knotenelement 10 gemäss dem ersten Ausführungsbeispiel der Erfindung hingewiesen. Dieses umfasst vorteilhafterweise einen Vollkörper, der kreuzförmige Ausfräsungen aufweist, die in der Draufsicht die Nuten 11 bzw. 12 bilden. Dadurch verbleibt für den Betrachter ein Kernwürfelbereich 13. Die Nuten 11 und 12 scheinen aus der einfachen Draufsicht der Fig. 3 einfache durchgehende Nuten zu sein, was sich jedoch aus dem Bild der Fig. 1 anders herausstellt. Die Nuten 11 bzw. 12 sind mit Hinterschneidungen 14 versehen, die das Spreizen des Verschlusselementes 41 ermöglichen. Dabei bestehen gekrümmte Eckbereiche 15 in dem Sinne, dass von der Kante 16 des Kernwürfelbereichs 13 eine Materiallinie bis zum mit dem Bezugszeichen 17 bezeichneten Eckpunkt des Knotenelementes 10 besteht. Wenn nun das Verschlusselement 41 in die Nut 11 oder 12 eingeführt wird, so besteht für das Verschlusselement 41 ein Spielraum in longitudinaler Hinsicht. Beim Spreizen der Rasthaken 43 und 44 ergibt sich durch die stehen gebliebenen Bereiche im Bereich der Ecke 17 eine automatische Zentrierungsfunktion, die ein Verriegeln des Profilelementes 21 oder 22 nur mittig des Knotenelementes 10 gestattet, da durch die Verminderung der Hinterschneidung der für die Rasthaken 43, 44 verfügbare Platz vermindert wird.

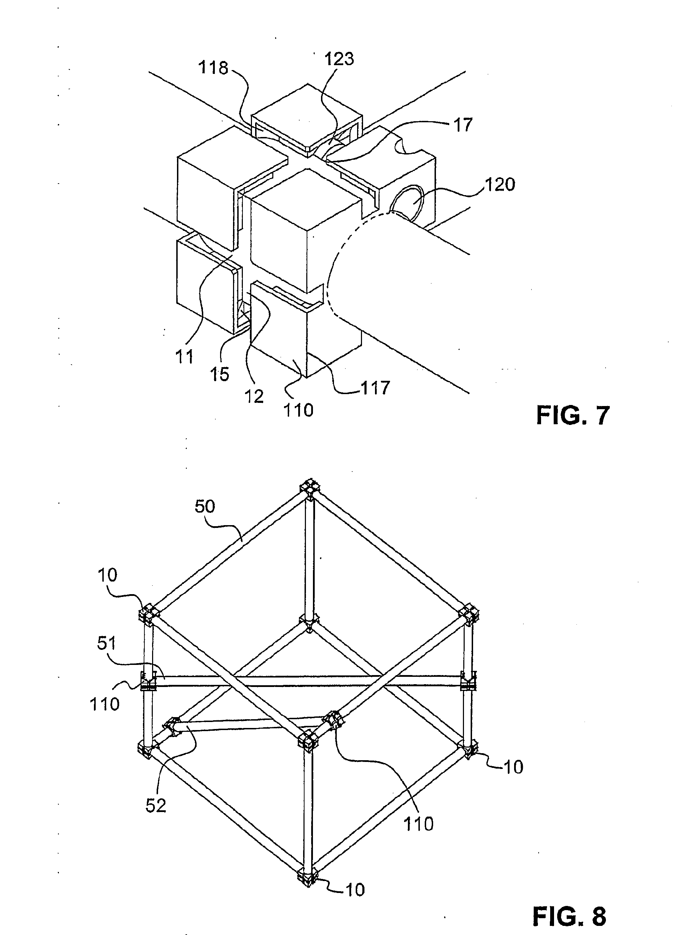

Somit ist ein Kastenrahmen beispielsweise entsprechend der Übersichtsfigur 8 erstellbar, der die Aussenrahmen eines Gerüst-Würfels 50 bildet. Es kann insbesondere im Messebau von grossem Interesse sein, Querverstrebungen einzusetzen, die mit den Bezugszeichen 51 und 52 in der Fig. 8 bezeichnet sind. Diese würden im allgemeinen Fall natürlich nicht innerhalb des Würfels selber angeordnet sein, sondern zwei solche Gerüst-Strukturen in einem beliebigen Winkel miteinander verbinden. Eine Verwendung des Knotenelementes 10 nach dem ersten Ausführungsbeispiel ist dabei nicht möglich, da die besagten Winkel von hier beispielsweise 45° für die Querverbindungen 51 und 52 oder auch andere Winkel nicht einstellbar sind.

Hierfür schafft das zweite Ausführungsbeispiel des Knotenelementes 110 Abhilfe.

Die Fig. 4 zeigt ein Knotenelement 110 gemäss einem zweiten Ausführungsbeispiel, bei dem ein erstes rundes Profilelement 21 und ein zweites eckiges Profilelement 24 im rechten Winkel an das Knotenelement 110 angeflanscht sind. In der Achse senkrecht zu der durch die Elemente 21 und 24 aufgespannten Ebene ist ein einziges röhrenförmiges Profilelement 33 durch das Knotenelement 110 durchgestossen angeordnet.

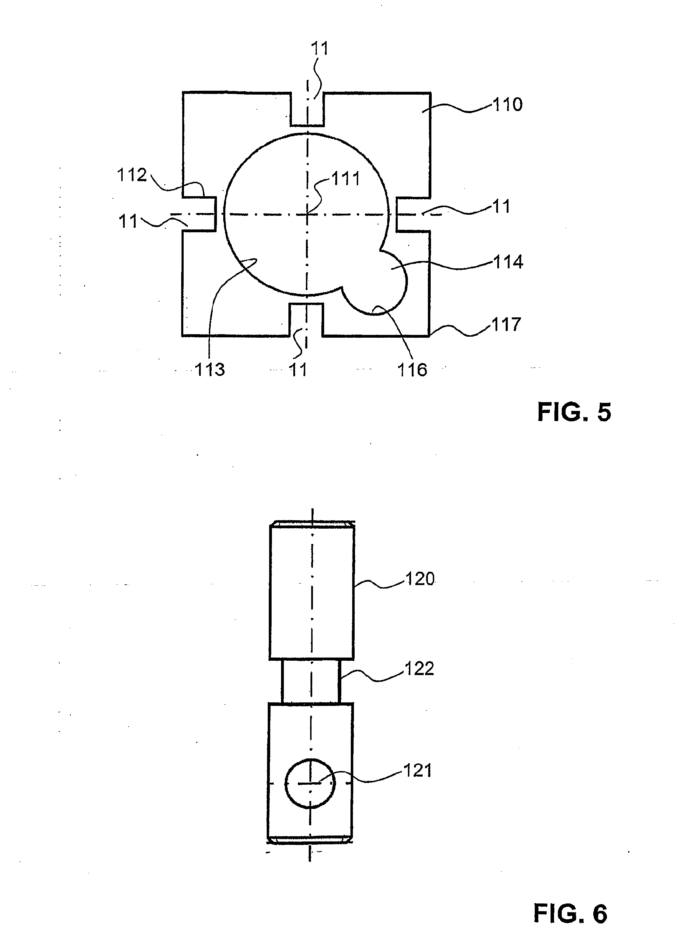

Die Fig. 5 zeigt ein solches Knotenelement 110 in der Draufsicht. Hier bestehen kreuzförmige Nuten 11 und 12, von denen in der Fig. 5 nur die Nuten 11 in den vier um die Längsachse 111 des Knotenelementes 110 angeordneten Kanten zu sehen sind. Die Nuten 11 sind auch hier wiederum wie beim ersten Ausführungsbeispiel hinterschnitten. Sie enden jedoch am äusseren Bereich des Knotenelementes 110 an einer Schulter 112, die in der Figur 4 gut sichtbar ist. Dort besteht ein beispielsweise hohlzylindrischer Übergangsbereich 118, der von der Tiefe der Hinterschneidung bis zur besagten Kante 112 führt. Somit besteht auch hier die Möglichkeit der zentrierten Anordnung des Verschlusselementes 41.

Um die longitudinale Achse 111 des Knotenelementes 110 herum ist die durchgehende Bohrung 113 vorgesehen, in die ein komplementäres zylindrisches oder hohlzylindrisches Profil 33 einschiebbar ist. In einem Eckbereich des Knotenelementes 110 ist eine weitere mindestens auf einer Seite offene, im Ausführungsbeispiel an beiden Seiten durchgehende, seitliche Einsatzbohrung 114 vorgesehen, die einen in der Fig. 6 dargestellten Einsatz 120 aufnehmen soll. Der Einsatz 120 weist im Querschnitt die Schnittfläche eines Kreises mit einer zweiten Kreissegmentfläche auf, deren Krümmung dem Aussendurchmesser des Profilelementes 33 entspricht. Somit ist der Einsatz 120 in die Bohrung 114 einschiebbar und liegt mit einem geringen Spiel an der komplementären Innenwand 116 des Knotenprofils 110, bzw. der Aussenwand des Profilelementes 33 an. Zur Festsetzung des Einsatzes 120 ist ein Verriegelungsstift 130 vorgesehen, der beispielsweise über eine konische Spitze verfügt, die zentrierend in die Bohrung 121 in den Einsatz 120 einführbar ist und somit mit einem im Knotenelement 110 vorgesehenen Gewinde zusammenwirkt. Vorzugsweise ist die Gewindebohrung im Knotenelement 110 in einem 45 Grad Winkel zwischen zwei Seitenflächen vorgesehen, also durchbricht eine Kante 117 des Knotenelementes 110.

Der Einsatz 120 verfügt über eine im Durchmesser kleinere Einschnürung 122, die mittig angeordnet ist. Sie ist in der Fig. 4 an dem dort ebenfalls mit dem Bezugszeichen 122 benannten Ort zu erkennen. vorgesehen Der in der Fig. 4 sichtbare breitere Anteil ist der direkt neben der Einschnürung 122 angeordnete Bereich des Einsatzes 120, da die Tiefe der Nut 11/12 im Bereich der Hinterschneidung nicht vollständig sein muss. Der Einsatz 120 steht also in die Hinterschneidung über. Eine entsprechende Verringerung des Durchmessers des Einsatzes 120 ist aber nur dann notwendig, wenn dieser mittlere Abschnitt ansonsten in die Nuten 12 ragen würde und ein Einschieben einer Paneele in der gewünschten Tiefe unmöglich machen würde. Andersherum kann die Bohrung 114 so gross ausgeführt werden, damit der Einsatz 120 stabiler ist. Es wird noch darauf hingewiesen, dass durch die Form der Bohrung 114 mit einem über 180 Grad hinaus geführten Innenkreis im Bereich des Übergangs in die Bohrung 113 ein grösseres Spiel des Einsatzes 120 bestehen muss, damit er auch gegen die Mantelfläche eines eingeführten Profilelementes 33 in festsetzender Absicht gezogen werden kann. Bei einem anderen in den Zeichnungen nicht dargestellten Ausführungsbeispiel sind zwei Einsätze 120 vorgesehen, beispielsweise in zwei Kantenbereichen. Es wäre auch möglich, statt einer Einschnürung 122, in axialer Richtung zwei getrennte Einsätze vorzusehen, die durch getrennte Verriegelungsstifte 130 betätigt werden.

Die Fig. 7 zeigt eine andere perspektivische Ansicht des Knotenelementes 110 gemäss dem zweiten Ausführungsbeispiel, bei dem erkennbar ist, dass die den Einsatz 120 verdünnende Einschnürung 122 nur im Bereich der Nut 12 vorgesehen ist und der mit dem Bezugszeichen 123 bezeichnete angrenzende Teil unterhalb der Nut vorgesehen ist, da an dieser Stelle nur die Rasthaken 43, 44 des Verschlusselementes in die Hinterschneidungen eingreifen müssen.

Die Fig. 8 zeigt in einer schematischen perspektivischen Ansicht vielfältige Einsatz-Möglichkeiten der beiden Knoten-Elemente 10 und 110 gemäss der Erfindung.

Obwohl in den meisten Figuren im Querschnitt kreisförmige Profilelemente 21, 22 dargestellt worden sind, die im 90°-Winkel zueinander Einlege-Nuten 23 aufweisen, ist es klar, dass auch andere Profile wie Rechteck-Profile 24 gemäss Figur 4 oder Rundprofile ohne Nuten wie die Profilelemente 31, 32, 33, eingesetzt werden können, die zur Vereinfachung in Fig. 8 ausschliesslich gezeichnet worden sind. Genauso ist die Darstellung von Knotenelementen 10, 110 mit sechs gleichartigen Seiten nicht zwingend notwendig. Bei in den Zeichnungen nicht ausgeführten Ausführungsformen können diese auch nur vier oder fünf Seiten entsprechend ausgestaltet haben, um solche Knotenelemente beispielsweise als Fuss-Elemente oder Decken-Elemente einzusetzen. Vorzugsweise sind die Knotenelemente aus Aluminium hergestellt, weil hier nach Versuchen der Anmelderin eine fräsende Bearbeitung der Hinterschneidungen in leichter Weise möglich ist.

Die in den Zeichnungen dargestellten zu einem Plan-Innenwürfel 13 führenden Hinterfräsungen können jedoch auch eine andere Form haben, da diese Hinterschneidungen einzig den Zweck haben, die Verriegelung mittels eines Verschlusselementes 41 zu gestatten. Insofern kann die Form auch in Abhängigkeit von dessen Ausgestaltung und beispielsweise dessen Breite ausgewählt werden. So wäre es möglich, die Eckbereiche 16 des Knotenelementes ohne Hinterschneidung auszugestalten, wenn dieser Raum nicht für das Verschlusselement 41 benötigt wird. Der gekrümmte Bereich 118 könnte tatsächlich Vollmaterial sein und somit in diesen Eckbereichen eine U-förmige Nut 11/12 begrenzen.

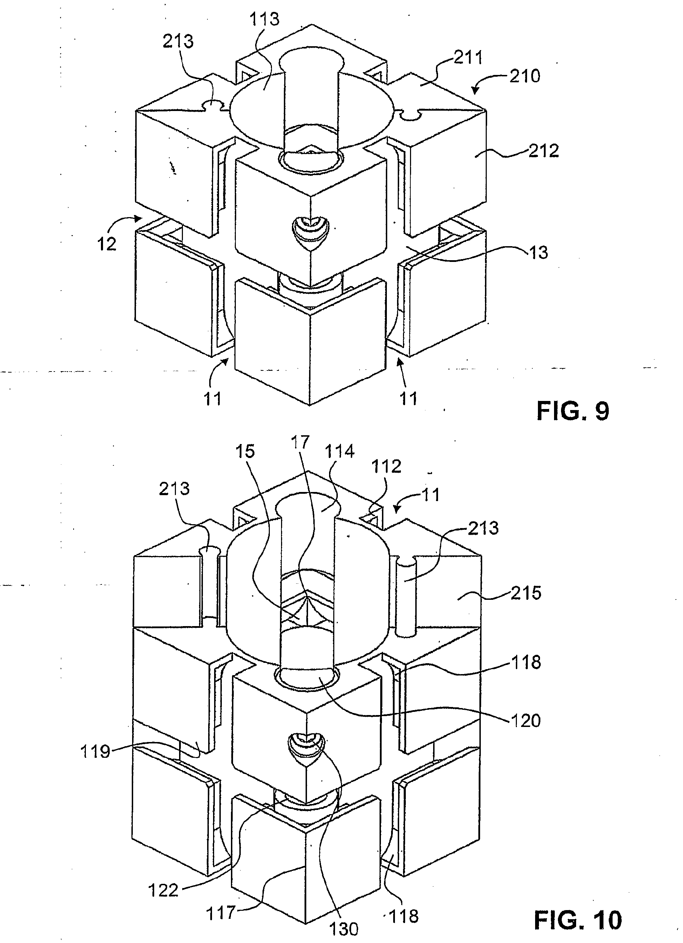

Fig. 9 zeigt eine perspektivische Ansicht eines modularen Knotenelementes 210 gemäss einem dritten Ausführungsbeispiel der Erfindung. Das modulare Knotenelement 210 umfasst zwei vorzugsweise identische Hälften 211 und 212, die zusammen im wesentlichen die Form des zweiten Knotenelementes 110 aufbauen. An den diagonal verlaufenden Verbindungsflächen 215 sind im Bereich nahe der zentralen Bohrung 113 an den Knotenelementen beidseitig jeweils eine Nut-Feder-Verbindung parallel zur Längsachse 111 vorgesehen, bei der sich eine Feder oder Zunge 213 in eine Nut 214 erstreckt und eine formschlüssige Verbindung ergibt. Der Vorteil der Zweiteiligkeit liegt in der Möglichkeit des späteren Ansetzens dieser Knotenelemente 210 an bereits erstellte Streben von Konstruktionen gemäss Fig. 8. Dabei reicht das durch die Bohrung 113 vorgegebene Spiel aus, um die beiden Hälften wie in Fig. 10 gezeigt ineinander zu schieben. Es bestehen dann bei Einsatz von zwei identischen Hälften zwei Einsatzbohrungen 114 für Einsätze 120. Aus der Fig. 10 ist gut zu erkennen, dass ein Einsatz 120 eingesetzt ist, während die gegenüberliegende Bohrung 114 leer ist. Dafür sieht man dort schön die in der Ecke 17 verlaufenden gekrümmten Bereiche 15, die sich aus zwei sich schneidenden Zylinderhohlstücken (wie den Bereichen 118) ergeben. Der Einsatz 120 endet eben mit der Oberseite des Knotens 210 und man sieht aus der Fig. 10 gut die sich aus zwei sich schneidenden Kreisen ergebende Querschnittsform des Einsatzes 120.

Bei einem Knotenelement 10, 110 oder 210 von 40 oder 60 Millimeter Kantenlänge ist die Breite der Nut 11 oder 12 beispielsweise etwas über 8 Millimeter, um Verschlusselemente 41 mit eben dieser Breite aufnehmen zu können. Die Hinterschneidung, also die Tiefe des Überstehens der Platte 119, beträgt beispielsweise 2 bis 5, insbesondere knapp 4 Millimeter. Der Abstand in Längsrichtung der Achse 111 zwischen dem Beginn der gegenüberliegenden gekrümmten Bereiche 118 beträgt beispielsweise etwas über 42 Millimeter, wenn die Länge des in die Nut 11 oder 12 eintauchenden Verschlusselementes 41 beispielsweise 42 Millimeter beträgt, so dass eine Zentrierung beim Spreizen desselben nach dem Einsetzen sichergestellt ist. Eine Bohrung 113 mit etwas über 40 Millimeter Durchmesser für einen entsprechenden 4-Zentimeter-Rundstab 33 ist möglich, ohne die Festigkeit des Knotenelementes 110 oder 210 zu beinträchtigen.

Der Knoten 110 oder 210 kann auch ohne Bohrung 114 für eine Verwendung ohne Einsatz 120 ausgestaltet sein, sondern ein Verriegelungsstift könnte direkt in eine entsprechende Bohrung in dem Knotenelement auf den Stab 33 eingeschraubt werden. Auch wäre es möglich, dafür die Bohrung 113 leicht grösser als den Stab 33 auszuführen, um einen den Stab 33 schützenden dünnen Mantel zwischen Stab 33 und Knoten 110, 210 anzuordnen.

Es ist auch möglich, den Knoten 110/210 für nicht runde Stäbe auszulegen, sondern für eckige, wie im Querschnitt quadratische, hexagonale oder andere Polygonzüge. Dabei ist dann die Bohrung 113 entsprechend anders auszuführen, wobei die Verdrehbarkeit des Knotenelementes 110, 210 verloren geht.

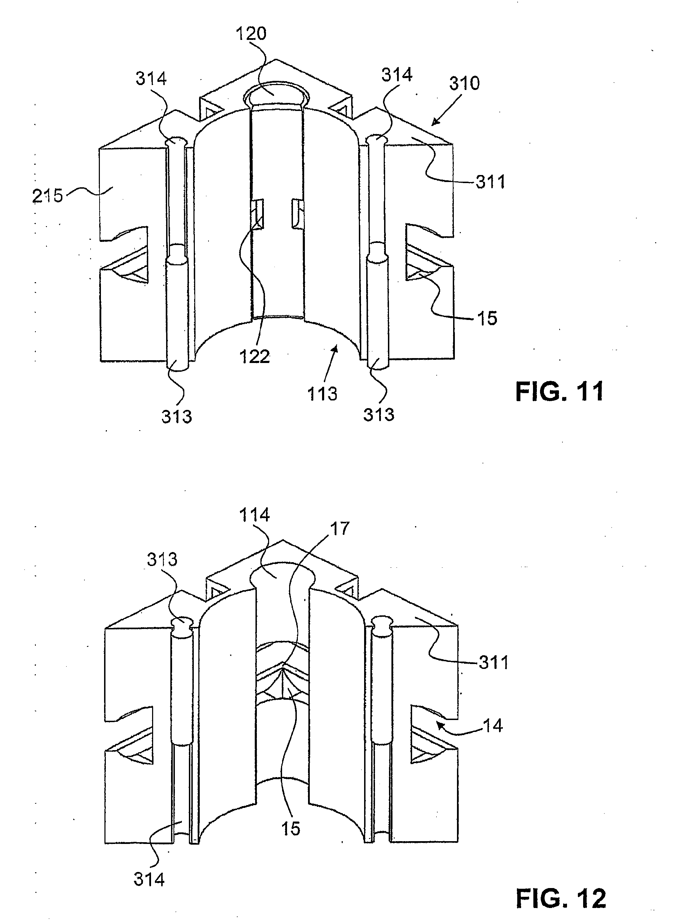

Die Fig. 11 zeigt eine perspektivische Ansicht eines modularen Knotenelementes 310 gemäss einem vierten Ausführungsbeispiel der Erfindung mit Einsatz 120 und Fig. 12 eine perspektivische Ansicht des Knotenelementes nach Fig. 11 ohne Einsatz. Das modulare Knotenelement 310 umfasst zwei vorzugsweise identische Hälften 311, die zusammen die Form des dritten Knotenelementes 210 aufbauen. An den diagonal verlaufenden Verbindungsflächen 215 sind im Bereich nahe der zentralen Bohrung 113 an den Knotenelementen beidseitig jeweils eine durchgehende sich in der tiefe verbreiternde Nut 314 parallel zur Längsachse 111 vorgesehen, in die eine Feder oder Zunge 313 einsteckbar ist und eine formschlüssige Verbindung ergibt. Die Zunge 313 weist vorteilhafterweise eine Länge über die Hälfte der Höhe des Knotenelementes 310 auf. Somit können in einer Hälfte 311 des Knotens, hier Fig. 11 zwei Zungen 313 unten in die Nut 314 eingelegt sein. In der andere Hälfte 311 des Knotens sind die Zungen 313 ebenfalls von einer Seite eingelegt, so dass bei entsprechender Anordnung der der Hälften die Hälften zu einem ganzen Knotenelement 310 zusammenschiebbar sind. Die Federn 313 in Form einer "8" können eingelegt, eingeklemmt, eingeklebt oder sonstwie auch fest mit der zugehörigen Hälfte 311 verbunden sein. Es ist auch möglich, diese Zungen 313 diagonal analog zum Ausführungsbeispiel des Fig. 9 und 10 vorzusehen.

| | | | |
|---|---|---|---|
| Bezugszeichen-Liste | | 21 | Rundes Profilelement |
| 10 | Knotenelement | 22 | Rundes Profilelement |
| 11 | Nut | 23 | Längs-Nut |
| 12 | Nut | 24 | Eckiges Profilelement |
| 13 | Kernwürfel | 31 | Rundes Profilelement oder Rundstab |
| 14 | Hinterschneidung | | |
| 15 | Gekrümmter Eckbereich | 32 | Rundes Profilelement |
| 16 | Innenseitenkante | 33 | Rundes Profilelement |
| 17 | Ecke der Nut | 41 | Verschlusselement |
| 18 | Aussenkante | 42 | Öffnung |
| 43 | Rasthaken | 120 | Einsatz |
| 44 | Rasthaken | 121 | Bohrung |
| 50 | Gerüstwürfel | 122 | Einschnürung |
| 51 | Querverstrebung | 130 | Verriegelungsstift |
| 52 | Querverstrebung | 210 | Knotenelement |
| 110 | Knotenelement | 211 | eine Hälfte des Knotens |
| 111 | Längsachse | 212 | eine Hälfte des Knotens |
| 112 | Schulter | 213 | Feder / Zunge |
| 113 | Innenbohrung | 214 | Nut |
| 114 | Einsatzbohrung | 215 | Verbindungsfläche |
| 116 | Innendurchmesser | 310 | Knotenelement |
| 117 | Kante | 311 | eine Hälfte des Knotens |
| 118 | gekrümmter Bereich | 313 | Feder / Zunge |
| 119 | überstehende Platte | 314 | Nut |

## Patentansprüche

1. Knotenelement (10, 110, 210, 310) für Profilelemente (31, 32, 33), die mit Hilfe von jeweils einem an deren Stirnseite vorgesehenen Verschlusselement (41) mit dem Knotenelement (10, 110, 210, 310) verbindbar sind, wobei das Knotenelement (10, 110, 210, 310) mindestens an zwei gegenüberliegenden Seiten mindestens eine schlitzförmige Öffnung (11, 12) zur Aufnahme eines Verschlusselementes (41) des Profilelementes (31, 32, 33) aufweist, wobei sich die schlitzförmige Öffnung (11, 12) mindestens teilweise seitlich in einen dahinter liegenden Freiraum (14) verbreitert, wobei die schlitzförmige Öffnung (11, 12) über die gesamte Seite des Knotenelementes (10, 110, 210) durchgehend ist und eine vorbestimmte Tiefe (13) aufweist, wobei eine zentrische (111) Durchbohrung (113) zur Aufnahme eines durch das Knotenelement (110, 210) hindurchführbaren Profilelementes (33) vorgesehen ist und **dadurch gekennzeichnet, dass** parallel zur Durchbohrung (113) eine Ausnehmung (114) zur Aufnahme eines Einsatzes (120) vorgesehen ist, der eine zum durchführbaren Profilelement (33) komplementäre Innenform aufweist, um durch ein Verriegelungselement (130) einen Reibschluss mit dem Profilelement (33) einzugehen.

2. Knotenelement (210, 310) nach Anspruch 1, **dadurch gekennzeichnet, dass** das Knotenelement (210, 310) aus zwei im Querschnitt dreieckigen, vorzugsweise identischen, Hälften (211, 212; 311) besteht, so dass die Hälften (211, 212; 311) beidseitig eines zu umschliessenden Profilelementes (33) ansetzbar sind, wobei die Hälften (211, 212; 311) über eine Nut-Feder-Verbindung (213, 214; 313, 314) oder eine Verschraubung miteinander verbindbar sind.

3. Knotenelement (310) nach Anspruch 2, **dadurch gekennzeichnet, dass** die Nut-Feder-Verbindung (313, 314) in jeder Hälfte (311) aus zwei parallel zur Durchbohrung (113) vorgesehenen Nuten (314) bestehen, in welche in eine Hälfte der Länge der Nut (314) jeweils eine Feder (313) zur Erstellung der Nut-Feder-Verbindung (313, 314) für das Knotenelement (310) vorgesehen ist, die in die Nut (314) eingelegt oder in der Nut (314) fest mit der Hälfte (311) verbunden ist.

4. Knotenelement (10, 110, 210, 310) nach einem der Ansprüche 1 bis 3, **dadurch gekennzeichnet, dass** das Knotenelement (10, 110, 210, 310) mit seinen Aussenflächen würfelförmig ist.

5. Knotenelement (10, 110, 210, 310) nach einem der Ansprüche 1 bis 4, **dadurch gekennzeichnet, dass** die schlitzförmigen Öffnungen (11, 12) mittig zur zugehörigen Seitenfläche des Knotenelementes (10, 110, 210, 310) verlaufen und/oder dass die schlitzförmigen Öffnungen (11, 12) kreuzförmig angeordnet sind.

6. Knotenelement (10, 110, 210, 310) nach einem der Ansprüche 1 bis 5, **dadurch gekennzeichnet, dass** die seitlichen Freiräume (14) an den Aussenkanten (18) der Aussenflächen in Schultern (112) enden.

7. Knotenelement (10, 110, 210, 310) nach Anspruch 6, **dadurch gekennzeichnet, dass** die Eckbereiche der Schultern (112) in der zu den zugeordneten Freiräumen (14) führenden Ausnehmungen eine gekrümmte Zentrierfläche (15, 118) aufweisen.

## Claims

1. A junction element (10, 110, 210, 310) for profiled elements (31, 32, 33), which can be connected to the junction element (10, 110, 210, 310) in each case with the aid of a closure element (41) provided at their end face, wherein the junction element (10, 110, 210, 310) comprises, at least on two opposite sides, at least one slot-shaped opening (11, 12) for receiving a closure element (41) of the profiled element (31, 32, 33), wherein the slot-shaped opening (11, 12) at least partially widens laterally into a clearance (14) lying behind the latter, wherein the slot-shaped opening (11, 12) is continuous over the entire side of the junction element (10, 110, 210) and has a predetermined depth (13), wherein a central (111) through-bore (113) is provided for receiving a profiled element (33) that can be guided through the junction element (110, 210) and **characterised in that** there is provided parallel to the through-bore (113) a recess (114) for receiving an insert (120), which has an internal shape complementary with the profiled element (33) that can be guided through, in order to enter into a frictional connection with the profiled element (33) by means of a locking element (130).

2. The junction element (210, 310) according to claim 1, **characterised in that** the junction element (210, 310) comprises two preferably identical halves (211, 212; 311) triangular in cross-section, so that the halves (211, 212; 311) can be seated on each side of a profiled element (33) to be surrounded, wherein the halves (211, 212; 311) can be connected to one another by means of a tongue-and-groove connection (213, 214; 313, 314) or a screwed connection.

3. The junction element (310) according to claim 2, **characterised in that** the tongue-and-groove connection (313, 314) in each half (311) comprises two grooves (314) provided parallel to the through-bore (113), into which grooves, into a half of the length of the groove (314), a tongue (313) is provided in each case so as to produce the tongue-and-groove connection (313, 314) for the junction element (310), said tongue being inserted into the groove (314) and being connected in the groove (314) fixedly to the half (311).

4. The junction element (10, 110, 210, 310) according to any one of claims 1 to 3, **characterised in that** the junction element (10, 110, 210, 310) is cube-shaped with its external faces.

5. The junction element (10, 110, 210, 310) according to any one of claims 1 to 4, **characterised in that** the slot-shaped openings (11, 12) run centrally to the respective lateral face of the junction element (10, 110, 210, 310) and/or that the slot-shaped openings (11, 12) are disposed cross-shaped.

6. The junction element (10, 110, 210, 310) according to any one of claims 1 to 5, **characterised in that** the lateral clearances (14) terminate in shoulders (112) at the outer edges (18) of the external faces.

7. The junction element (10, 110, 210, 310) according to claim 6, **characterised in that** the corner regions of the shoulders (112) have a curved centring face (15, 118) in the recesses leading to the associated clearances (14).

## Revendications

1. Elément de noeud (10, 110, 210, 310) pour éléments profilés (31, 32, 33), lesquels peuvent être respectivement reliés à l'aide d'un élément de fermeture (41) prévu sur leur côté frontal à l'élément de noeud (10, 110, 210, 310), moyennant quoi l'élément de noeud (10, 110, 210, 310) présente sur au moins deux côtés situés en vis-à-vis au moins une ouverture en forme de fente (11, 12) pour la réception d'un élément de fermeture (41) de l'élément profilé (31, 32, 33), moyennant quoi l'ouverture en forme de fente (11, 12) s'élargit au moins partiellement latéralement dans un espace libre (14) situé derrière, moyennant quoi l'ouverture en forme de fente (11, 12) est ininterrompue sur l'ensemble du côté de l'élément de noeud (10, 110, 210) et présente une profondeur prédéfinie (13), moyennant quoi l'on prévoit une perforation (113) centrée (111) pour la réception d'un élément profilé (33) que l'on peut faire passer à travers l'élément de noeud (110, 210) et **caractérisé en ce que** parallèlement à la perforation (113), un évidement (114) est prévu pour la réception d'un empiècement (120) qui présente une forme intérieure complémentaire à celle de l'élément profilé (33) que l'on peut faire passer afin de parvenir à une fermeture par friction avec l'élément profilé (33) grâce à un élément de verrouillage (130).

2. Elément de noeud (210, 310) selon la revendication 1, **caractérisé en ce que** l'élément de noeud (210, 310) se compose de deux moitiés (211, 212 ; 311) triangulaires en coupe transversale, de préférence identiques, de sorte à pouvoir apposer les moitiés (211, 212; 311) des deux côtés d'un élément profilé (33) à entourer, moyennant quoi les moitiés (211, 212 ; 311) peuvent être reliées ensemble par l'intermédiaire d'un joint à rainure et languette (213, 214; 313, 314) ou d'un boulonnage.

3. Elément de noeud (310) selon la revendication 2, **caractérisé en ce que** le joint à rainure et languette (313, 314) se compose, dans chaque moitié (311), de deux rainures (314) prévues parallèlement à la perforation (113) dans lesquelles on prévoit, dans une moitié de la longueur de la rainure (314), respectivement une languette (313) pour l'établissement du joint à rainure et languette (313, 314) pour l'élément de noeud (310) laquelle est placée dans la rainure (314) ou bien est reliée de manière fixe à la moitié (311) dans la rainure (314).

4. Elément de noeud (10, 110, 210, 310) selon l'une des revendications 1 à 3, **caractérisé en ce que** l'élément de noeud (10, 110, 210, 310) est en forme de dé avec ses surfaces extérieures.

5. Elément de noeud (10, 110, 210, 310) selon l'une des revendications 1 à 4, **caractérisé en ce que** les ouvertures en forme de fente (11, 12) s'étendent centralement par rapport à la surface latérale associée de l'élément de noeud (10, 110, 210, 310) et/ou **en ce que** les ouvertures en forme de fente (11, 12) sont disposées en forme de croix.

6. Elément de noeud (10, 110, 210, 310) selon l'une des revendications 1 à 5, **caractérisé en ce que** les espaces libres (14) latéraux se terminent par des épaulements (112) au niveau des arêtes extérieures (18) des surfaces extérieures.

7. Elément de noeud (10, 110, 210, 310) selon la revendication 6, **caractérisé en ce que** les zones d'angle des épaulements (112) présentent une surface de centrage (15, 118) courbée dans les évidements allant vers les espaces libres (14) associés.
